# EUROPÄISCHE PATENTSCHRIFT

(11) **EP 3 581 907 B1**
(45) Veröffentlichungstag und Bekanntmachung des Hinweises auf die Patenterteilung: **13.01.2021**
(21) Anmeldenummer: 19173489.6
(22) Anmeldetag: 09.05.2019
(51) Int. Cl.: G01L 23/18, G01L 19/04

(54) **MEMBRANDRUCKSENSOR MIT MESSFEDER-STÜTZROHR UND DARAUF BESCHICHTETEM DRUCKSENSOR**
MEMBRANE PRESSURE SENSOR WITH MEASURING SPRING SUPPORT TUBE AND PRESSURE SENSOR COATED ON TOP OF THE MEASURING SPRING SUPPORT TUBE
CAPTEUR DE PRESSION MEMBRANE AVEC UN TUBE DE SUPPORT DE RESSORT DE MESURE ET CAPTEUR DE PRESSION SITUÉ AU DESSUS DU TUBE DE SUPPORT DE RESSORT DE MESURE

(30) Priorität: 12.06.2018 DE 102018113935
(43) Veröffentlichungstag der Anmeldung: 18.12.2019
(73) Patentinhaber: IMES Intelligent Measuring Systems GmbH, 87600 Kaufbeuren (DE)
(72) Erfinder: NEUMANN, Stefan, 87665 Mauerstetten (DE); GLASER, Josef, 8047 Graz (AT)
(74) Vertreter: Riebling, Peter

(56) Entgegenhaltungen:
- DE-A1-102005 043 688
- DE-A1-102014 116 760
- US-A- 3 857 287
- US-A1- 2008 011 089

## Beschreibung

Die Erfindung betrifft einen Membrandrucksensor mit einem darin angeordneten Messfeder-Stützrohr und einer auf dem Messfeder-Stützrohr durch einen Beschichtungsvorgang aufgebrachten Druckmessschicht nach dem Oberbegriff des Patentanspruches 1.

Erfindungsgemäße Membrandrucksensoren werden bevorzugt zur Messung der Arbeitsdrücke im Zylinderkopf von Brennkraftmaschinen verwendet, insbesondere für 2- oder 4-Takt-Schiffsdiesel-Großmotoren und dergleichen. Dabei müssen Drücke im Bereich bis zu 800 bar bei durchschnittlichen Brennraumtemperaturen im Bereich von etwa 2000 bis 3000 Grad Celsius beherrscht werden, die an bestimmten Stellen im Brennraum auch darüber liegen können.

Der Brennraumdruck erreicht bei aufgeladenen Otto-Motoren etwa um die 90 bar. Bei einem aufgeladenen PKW-Diesel-Motor, der mit Direkt-Einspritzung arbeitet, liegt dieser bei 160 bar, bei Großdieselmotoren im Durchschnitt bei etwa 200 bar.

Bei derartigen Hochtemperatur- und Hochdruck-Sensoren besteht das Problem, dass bei den gegebenen hohen Temperaturen und Drücken die meisten Messsysteme ausfallen und/oder nur eine kurze Lebensdauer haben.

Daher gab es vielfältige Versuche, mit speziellen Konstruktionen für einen Hochdruck-Membrandrucksensor die entstehenden Hitzeeinwirkungen und Druckspitzen zu beherrschen.

Beispielsweise ist aus der DE 38 11 311 C1 bekannt, ausgehend von den in das Druckvolumen hineinragenden Membranen, einen nicht-elastischen Druckstempel vorzusehen, der axial im Gehäuse verschiebbar ist, und auf das piezoelektrische Messelement wirkt, das von der Rückseite von einem Gegenlager gehalten ist, welches über eine Andruckhülse vorgespannt ist.

Nachteil einer solchen Anordnung ist, dass der Druckstempel selbst keine Druckspitzen aufnehmen und abfedern kann. Druckspitzen werden somit unverändert auf die Membranfläche übertragen, was zu einer schnellen Zerstörung führen kann.

Mit dem Gegenstand der DE 10 2010 040 373 A1 ist eine Überlastsicherung für eine Membrandruckfläche bekannt geworden, bei der ein mikromechanischer Drucksensor vorhanden ist. Eine abfedernde Druckübertragung durch ein Messfeder-Stützrohr findet bei dieser Druckschrift keine Anwendung.

Mit dem Gegenstand der DE 10 2005 043688 A1 ist ein Membrandrucksensor zur Erfassung des Brennraumdrucks bei Brennkraftmaschinen bekannt geworden, wobei an der Vorderseite eines Sensorgehäuses eine mit dem Sensorgehäuse abdichtend verbundene und von der Brennraumatmosphäre beaufschlagte Membranscheibe vorgesehen ist, deren Durchbiegung über ein oder mehrere Übertragungselemente auf einen Sensor übertragbar ist. Dabei ist zur Übertragung der Durchbiegung der Membranscheibe auf eine Messfläche eines Sensors eine etwa im Profil hutförmige oder hülsenförmige Messfeder mit der Membranscheibe an ihrem unteren axialen Ende verbunden, welche mit ihrem gegenüberliegenden axialen Ende unter Bildung eines radialen Hohlraums mit einer Montagehülse verbunden ist, und dass der Verbund aus Messfeder und Montagehülse ein radiales Spiel zum Innenumfang des Sensorgehäuses aufweist.

Es handelt sich hierbei um einen losen verschiebbaren Aufbau, bei dem keine Fixierungen der Bauteile zueinander vorgesehen sind, was mit dem Nachteil verbunden ist, dass das bloße Aufeinanderstecken dieser Bauteile zu einer unerwünschten Verschiebung der Bauteile während des Betriebes führt, so dass eine Verzugsgefahr während des Betriebes aufgrund einwirkender Temperaturen und Temperaturunterschiede gegeben ist und dass durch den langen Aufbau der Messfeder eine ungünstige Biegefrequenz erzielt wird, die eine genaue Messung verhindert.

Die US 2008/0011089 A1 zeigt einen piezoelektrischen Drucksensor, der piezoelektrische Messelemente umfasst, die in einem Gehäuse angeordnet sind und zwischen dem Gehäuseboden und einer Membran, die an der Druckseite des Gehäuses vorgesehen ist, vorgespannt sind. Die piezoelektrischen Messelemente sind an der Außenseite eines Vorspannungselements angeordnet, das sich im Wesentlichen entlang der Längsachse des Sensors befindet.

So wird hier eine sehr lang ausgebildete Messfeder verwendet, die zwischen sich zwei piezoelektrische Messelemente einspannt, die aufgrund der Verkürzung oder Verlängerung der Messfeder und aufgrund einwirkender Druckwirkung zusammengestaucht oder auseinandergezogen werden und so ein Messsignal erzeugt wird.
Dies hat jedoch den Nachteil, dass nur die Verformung des hülsenförmigen Körpers gemessen wird und eine Dehnungsmessbrücke, wie Sie beispielsweise mit der DE 10 2005 043688 A1, dort keine Anwendung finden kann, da bereits die Ableitung der piezoelektrischen Spannung aus den vorhandenen Messelementen außerordentlich schwierig und problembehaftet ist.

Die US 3 857 287 A zeigt einen Druckwandler zum Messen von Drücken während Verbrennungsprozessen, wobei das druckempfindliche Element in einem Rohrkörper angeordnet ist und unter Vorspannung steht. Das dem Verbrennungsprozess zugewandte Ende des Rohrkörpers ist mit einer scheibenförmigen Membran versehen, die einen äußeren flexiblen Abschnitt und einen inneren kreisförmigen Abschnitt aufweist, der mit einem Hitzeschild versehen ist. Ein temperaturbeständiges Material füllt eine radiale Aussparung um den Hitzeschild-Halteabschnitt der Membran.

Hierbei wird eine eingeschraubte Messfeder verwendet, deren Messignal lediglich auf einen Kristallkörper übertragen wird, womit kein stabiles von Temperaturschwankungen relativ unabhängiges Messergebnis erzeugt werden kann.

Diesen Nachteil hat auch die DE 10 2014 116760 A1, da hier lediglich im Innenraum einer hülsenförmigen Messfeder ein Piezokristall angeordnet ist, welches auf eine Druckmessung ausgerichtet ist.

Mit dem Gegenstand der DE 10 2011 017 647 A1 ist ein Sensorelement zur Erfassung des Drucks im Brennraum einer Brennkraftmaschine bekannt geworden, bei dem die Biegung der Brennraum-beaufschlagten Membran über eine starre Druckaufnehmerplatte über biegeelastische Stege eines hülsenförmigen Adapterelements auf einen gleichfalls starren Kompensationskörper übertragen wird. Der Kompensationskörper beaufschlagt ein starres zylinderförmiges Übertragungselement, welches an der einen Seite des Sensorelements anliegt. An der Rückseite des Sensorelements liegt ein starres Abstützelement an, das über ein Fixierelement vorgespannt wird.

Das im Zwischenraum zwischen der starren Druckaufnehmerplatte und dem gleichfalls starren Kompensationskörper angeordnete hülsenförmige Adapterelement weist lediglich randseitige biegeelastische Stege auf, welche lediglich eine Zentrierung der axialen Verschiebungslage zwischen der Druckaufnehmerplatte und dem Kompensationskörper erreichen sollen. Die Kompensation von Druckspitzen ist mit einer solchen Anordnung jedoch nicht möglich. Überdies macht die große Anzahl der verwendeten Übertragungselemente den Membransensor störanfällig.

Mit der AT 349 796 B ist ein membranübergreifendes Hitzeschild bekannt geworden, welches ein thermisch entkoppeltes Kraft-Übertragungsteil darstellt. Der piezoelektrische Messsatz wird über eine hülsenartige Rohrfeder gegen ein keramisches Kraftübertragungsrohr vorgespannt, das seinerseits an einer Brennraum-beaufschlagten Plattenmembran anliegt. Nachdem das hülsenartige Kraftübertragungsrohr aus einem Keramikmaterial besteht, können unerwünschte Druckspitzen zu einer Zerstörung des Messsatzes führen.

Bei der US 79 50 285 B2 ist ein Hitzeschild für ein Membran-Auflager zu erkennen, wobei jedoch eine Abfederung von Druckspitzen bei gleichzeitiger Hochtemperatur-Stabilität nicht zu entnehmen sind.

Mit dem Gegenstand der AT 504 485 B1 ist ein Wärmeleitelement bekannt geworden, bei dem stabförmiges Messfeder-Stützrohr (Rohrfeder) eine mechanisch belastbare Verbindung von der druckaufnehmenden Membranfläche bis zum Messsensor ergibt. Dabei wird eine seismische Masse mit der Rohrfeder gegen zwei piezoelektrische Kompensationselemente vorgespannt. Es sind allerdings keine Vorkehrungen zur Ableitung von Druckspitzen zu entnehmen.

Derartige Druckspitzen wirken vor allem unter bestimmten Betriebsbedingungen als unerwünschte Druckschläge, die zwar selten auftreten, dann aber - wegen ihrer Spitzenbelastung und wegen der plötzlichen Druckerhöhung - in der Regel zu einer Zerstörung des Membrandrucksensors führen.

Hier spielt vor allem die Druckanstiegsgeschwindigkeit in der Art eines Druckschlages eine Rolle, wobei ein tolerabler Druckanstieg von 4 bis 7 bar von den meisten Hochdrucksensoren noch toleriert wird, nicht jedoch ein Druckanstieg von 100 bar, der nur relativ selten vorkommt, dann aber - im Eintrittsfall - zu einer sofortigen Zerstörung des Membrandrucksensors führt.

Der Erfindung liegt deshalb die Aufgabe zugrunde, einen Membrandrucksensor der eingangs genannten Art so weiterzubilden, dass auch derartige Druckschläge, das heißt schlagartig auftretende Druckspitzen, vom Membrandrucksensor noch toleriert werden, ohne dass diese Schläge zu seiner Zerstörung führen.

Zur Lösung der gestellten Aufgabe ist die Erfindung durch die technische Lehre des Anspruches 1 gekennzeichnet.

Die technische Lehre der Erfindung beschreibt eine elastisch federnd ausgebildete Schutzvorrichtung, welche im Brennraum entstehende, extreme Druckschläge lediglich gedämpft und stark abgeschwächt auf den Messsensor überträgt.

Dabei ist vorteilhaft, wenn der Messsensor nicht als piezoelektrischer Sensor ausgebildet ist, der eine Reihe von Bauteilen zur Druckübertragung und zur Erzeugung einer Vorspannung benötigt. Die erfindungsgemäße Ausbildung des Messsensors als tellerförmige, durchbiegbare Sensorfläche, auf welcher eine Anzahl von Biegesensoren angeordnet sind, vermeidet aufwendige Übertragungskörper, die noch eine zusätzliche axiale Zentrierung benötigen (DE 10 2011 017 647 A1) und zusätzliche Vorspannelemente.

Durch die spezielle Gestaltung der Messfeder sind auf deren Messfläche Bereiche mit gleicher Zug- und Druckspannung vorhanden, wie sie für das Aufbringen einer Widerstandsstruktur von Vorteil sind.

Der Verbund von Messfeder und Montagehülse hat keinen Kontakt zur Innenfläche des Sensorgehäuses, somit werden die Messergebnisse nicht durch Temperaturschwankungen und Einbauspannungen des Sensorgehäuses verfälscht.

Da der auftretende Druck nicht direkt auf die Messfläche wirkt, sondern über die Membranscheibe (welche in der Dicke variiert werden kann) und die Messfeder, die als Stößel dient, an die Messfläche weitergeleitet wird, ist das Messelement unempfindlicher gegenüber möglichen Druckstößen.

Von besonderem Vorteil ist, dass die Sensorfläche direkt auf dem Dämpfungsund Schutzelement (das ist die Messfeder) aufgebracht ist, wodurch eine Vielzahl von Übertragungs- und Vorspannelementen eingespart werden kann, die beim vorher beschriebenen Stand der Technik notwendig waren. Das hohlkörperförmige, dosenartige Dämpfungs- und Schutzelement wird in der folgenden Beschreibung als "Messfeder" bezeichnet, die gegenüber dem Stand der Technik überlegene Eigenschaften besitzt.

Merkmal der Erfindung ist, dass im Sensorgehäuse, ausgehend von der in dem Druckraum hineinragenden Membranscheibe, ein unterer axialer und zentraler Ringansatz der Messfeder in den Druckraum hineinragt, und dass sich die Messfeder in axialer Richtung über einen etwa axialen Hülsenansatz in das Sensorgehäuse fortsetzt und dort ein tellerförmiger, radialer Ringansatz am Außenumfang ein radiales Spiel in Richtung zur Innenseite des Sensorgehäuses aufweist.

Damit beschreibt die Erfindung eine spezielle Messfeder, die einseitig im Bereich des unteren axialen Ansatzes an der Membranscheibe festgelegt ist, und andererseits - an der gegenüberliegenden Fläche - radial auswärts im Bereich eines radial im Durchmesser vergrößerten Ringansatzes an der Innenfläche des Sensorgehäuses ein radiales Bewegungsspiel aufweist.

Damit besitzt die Messfeder die Federcharakteristik einer zwischen zwei axial voneinander beabstandeten Lagerstellen eingespannten Tellerfeder und die federnde axiale Verschiebung wird durch die innere Reibung bei der Verformung gedämpft.

Durch die Festlegung im Bereich der bodenseitigen Einspannstelle kommt es nun bei einem Druckschlag zu einer Druckspitze, die direkt in axialer Richtung auf die Messfeder wirkt, und die besondere Konstruktionseigenschaft der Messfeder führt nun nicht zu einer direkten, unmittelbaren und ungedämpften Weiterleitung des Druckschlages auf die tellerförmige Messfläche, sondern aufgrund einer zentralen Mittenbohrung in der Messfeder und aufgrund weiterer Konstruktionsmerkmale verformt sich die Messfeder elastisch und dämpft damit weitgehend die Druckspitze, ohne dass es zu einer Zerstörung der auf der durchbiegbaren Messfläche aufgesputterten Messelemente kommt.

Mit der speziellen Konstruktion der Messfeder werden die unerwünschten Druckschläge durch eine elastische Verformung der Messfeder aufgefangen, was bisher beim Stand der Technik nicht der Fall war.

Im Ergebnis ist die Messfeder als elastisch in Längsrichtung federnd ausgebildete hohle Büchse geformt, der damit eine später noch näher zu beschreibende Federcharakteristik in der Art einer Tellerfeder zukommt.

In einer bevorzugten Ausgestaltung der Erfindung ist die Messfeder im Wesentlichen durch einen unteren, im Durchmesser verringerten axialen Hülsenansatz gekennzeichnet, welcher mit seiner Messfläche durch eine zentrale Mittenausnehmung in die Membranscheibe hindurchgreift und in den druckerfüllten Zylinderraum hineinsieht.

Ausgehend von dem im Durchmesser verringerten Hülsenansatz schließt sich danach ein im Durchmesser vergrößerter Ringbund an, an dessen Unterseite eine Anschlagfläche für eine Montagehülse vorgesehen ist, welche Montagehülse etwa aus zwei voneinander beabstandet miteinander verbundenen Ringhülsen besteht, wobei die eine, untere Ringhülse im Durchmesser vergrößert und die andere, sich axial anschließende Ringhülse im Durchmesser verkleinert ist und insgesamt eine zentrale Mittenbohrung aufweist.

Die Messfeder weist eine zentrale Mittenbohrung auf und erstreckt sind unter Beibehaltung eines radialen Hohlraums durch den Innendurchmesser der Montagehülse hindurch und bildet am oberen axialen Ende einen tellerförmigen Ringansatz der auf der Oberseite der Montagehülse aufliegt und radial außen mit dieser Verbunden ist. Damit ergibt sich eine obere Auflagerstelle des tellerförmigen Ringansatzes der somit um die zentrale Mitteausnehmung herum konvex biegbar ist.

Wenn nun eine Druckspitze auf den im Durchmesser verringerten unteren Hülsenansatz der Messfeder einwirkt, wird gleichzeitig auch die Membranscheibe verformt und die Druckspitze auf den axialen Hülsenansatz der Messfeder weitergeleitet, welcher sich aufgrund seiner zentralen Mittenbohrung radial verformt (aufpilzt) und den Verformungsschub an die im Durchmesser vergrößerte, tellerförmigen Ringansatz weiter leitet.

Nachdem der Ringansatz außenseitig von der Montagehülse abgestützt ist, verformt sich der Mittenbereich des tellerförmigen Ringansatzes um die zentrale Mittenausnehmung herum.

Nachdem die Messfläche auf der Oberseite des Ringansatzes angeordnet ist, verformt sich die Messfläche im Querschnitt bogenförmig, sodass die FederEigenschaft der Messfeder mit der einer Tellerfeder vergleichbar ist, die sich aufgrund eines Druckstoßes in der Art einer Tellerfeder elastisch verbiegt und danach zurück stellt.

Aufgrund dieser elastischen Verformung des im Durchmesser vergrößerten Ringansatzes wird eine Federcharakteristik wie eine Tellerfeder für die . Messfeder erreicht, was zu der beschriebenen vorteilhaften Wirkung führt, dass auch Druckspitzen, die um 90 bar über den üblichen Druckspitzen im Zylinderraum liegen, nicht zu einer Zerstörung der Messfläche und der auf der Messfläche aufgebrachten Messelemente führen. Dies auch deshalb, weil während der Aufbiegung der Tellerfeder (oder "Büchsenfeder") Stoßenergie durch die innere Reibung in den Biegeabschnitten vernichtet wird, die deshalb nicht zur Messfläche gelangt.

In einer ersten Ausgestaltung der Erfindung ist es vorgesehen, dass die Messfeder im Querschnitt etwa hutförmig ausgebildet ist, das heißt an einem oberen, im Durchmesser vergrößerten Ringansatz schließt sich in axialer Richtung ein länglicher Hülsenansatz an, der in einen unteren, im Durchmesser verringerten Hülsenansatz übergeht.

Die axiale Länge der Messfeder hat verschiedene günstige Eigenschaften, die je nach Einbauort und Anwendungszweck variieren können.

Es wird bevorzugt, wenn die Membranscheibe stirnseitig mit der Messfeder verschweißt wird. Dabei ist besonders wichtig, die Vorspannung zwischen Membrane und der Schulter der Messefeder ausreichend hoch zu "produzieren", sodass im Betrieb kein Gleiten stattfindet oder eine unerwünschte Spaltfederung auftritt.

Von besonderem Vorteil der dargestellten Konstruktionen ist, dass die niedrigste Eigenfrequenz des Messelementes eine Biegeschwingung bei ca. 16000Hz ist.

Die für das Messverhalten wichtigste Eigenform ist die, bei der die Masse von Membran-Druckplatte und Messfeder in Druckmess-Richtung auf die Messfeder drückt. Für diese direkt im Messsignal wirksame Eigenfrequenz wünschen sich Anwender einen möglichst hohen Wert, der mit der vorliegenden Konstruktion bei 35kHz erfüllt ist.

In einer ersten Ausgestaltung ist es vorgesehen, dass die axiale Länge der Messfeder relativ kurz ausgebildet ist, wobei der Vorteil besteht, dass die dynamischen Eigenschaften einer solchen Messfeder aufgrund der kurzen axialen Länge günstig sind.

Auch das Schwingungsverhalten wird durch die kurze axiale Länge günstig beeinflusst.

In anderen Ausführungsformen kann es vorgesehen sein, dass die axiale Länge größer gewählt wird, was mit einem anderen Eigenschwingverhalten verbunden ist und im Übrigen mit dem Vorteil verbunden ist, dass eine größere Temperaturleitstrecke zwischen der unteren, in den Hochtemperaturraum hineinragenden Messfläche in Richtung auf die mit den Messelementen beschichtete Messfläche gelingt.

In einer dritten Ausführungsform kann eine sehr lange axiale Länge für eine solche Messfeder verwendet werden, welches noch eine längere Temperaturleitstrecke mit einer entsprechenden Möglichkeit der Abkühlung der Messfläche bietet, wodurch dann die auf der Messfläche aufgebrachten Messelemente keinen hohen Temperaturen mehr ausgesetzt sind.

Im Folgenden wird die Erfindung anhand von lediglich einem Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Schnittansicht durch einen Sensor mit Detailansichten A, B und C
Figur 2: Seitenansicht eines Sensorgehäuses in einer ersten Ausführungsform
Figur 3: die Draufsicht auf das Sensorgehäuse nach Figur 2
Figur 4: Schnitt durch das Sensorgehäuse mit einem dort eingebauten Sensorelement
Figur 5: die Draufsicht auf die Messfläche der Messfeder
Figur 6: die Darstellung einer ersten Ausführungsform einer Messfeder in der Seitenansicht
Figur 7: die Draufsicht auf die Messfeder
Figur 8: der Schnitt durch die Messfeder
Figur 9: die perspektivische Darstellung der Messfeder
Figur 10: die Draufsicht auf die Messfeder
Figuren 11-14: eine zweite Ausführungsform eines Membrandrucksensors im Vergleich zu Figuren 1 bis 5
Figuren 15-18: eine zweite Ausführungsform für eine Messfeder
Figuren 19-22: eine dritte Ausführungsform eines Membrandrucksensors
Figuren 23-26: eine dritte Ausführungsform einer Messfeder
Figur 27: die Verformung einer Messfeder unter Einwirkung eines Druckschlages in schematisierter Darstellung
Figur 28: Ein vergrößerter Teilschnitt der Figur 27

In den nachfolgenden Zeichnungen werden insgesamt drei Ausführungsbeispiele für einen Membrandrucksensor mit jeweils einem Sensorgehäuse 1 gezeigt, wobei alle drei Ausführungsbeispiele gleich ausgebildet sind und deshalb die gleichen Teile mit den gleichen Bezugszeichen versehen sind.

Lediglich die Art und der Einbau der jeweiligen Messfeder 10 in den Membrandrucksensor und insbesondere in das Sensorgehäuse 1 sind unterschiedlich. Für die gleichen Teile der Messfeder 10 wurden auch die gleichen Bezugszeichen verwendet.

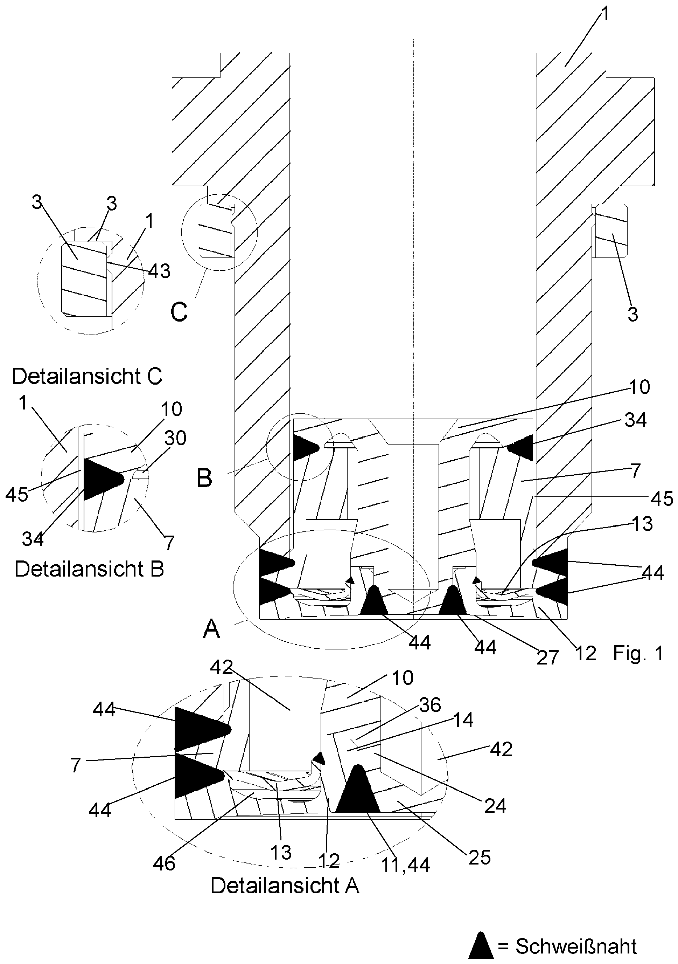

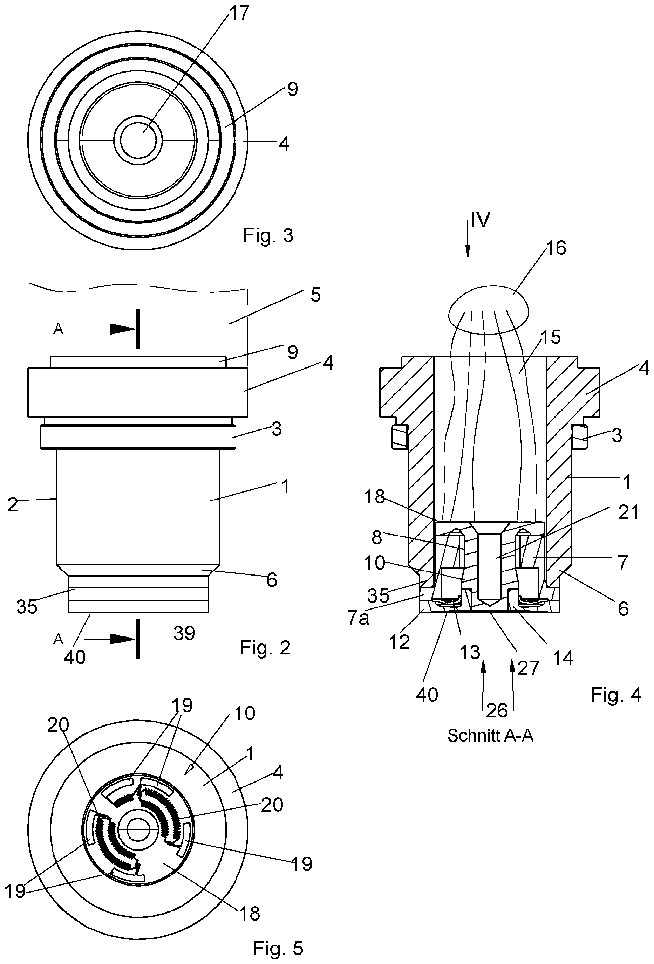

In Figur 1 und 2 ist allgemein ein Sensorgehäuse 1 dargestellt, welches aus einem Metallgehäuse besteht, welches einen zylindrischen Ansatz aufweist, der ein Außengewinde 2 trägt, mit dem der Membrandrucksensor in einer nicht näher dargestellten Einbaubohrung, in den Verbrennungsraum eines Diesel- oder Gasmotors hinein reichend, eingeschraubt wird.

Es ist in einer anderen, nicht näher dargestellten Ausführungsform auch möglich, dass das Sensorgehäuse 1 in ein Adaptergehäuse eingeschraubt wird, welches Adaptergehäuse dann selbst in den Zylinderraum eines Diesel- oder Gasmotors hineinragt.

Der Dichtring 3 wird auf dem Gewindekörper 43 aufgepresst. Hierfür ist am Gewindekörper 43 ein kleiner Absatz vorhanden (siehe Detailansicht C). Durch dies soll es möglich sein den Dichtring 3 bei Verschleiß auszutauschen.
Das Wärmeleitelement 13 wird zwischen der Membranscheibe 12 und der Montagehülse 7 eingelegt und mit diesen verschweißt. Die Messfeder 10 wird mit der Montagehülse 7 und der Membranscheibe 12 verschweißt.

Die Schweißnähte sind mit dem Bezugszeichen 34, 44 versehen oder dort - wo das Bezugszeichen aus Platzgründen nicht eingezeichnet werden konnte-durch ein schwarzes, gleichschenkliges Dreieck symbolisiert.

Das komplette Messelement (Bauteil: 10, 7, 13, 12) wird in das Sensorgehäuse 1 gesteckt und dann mit einer Schweißnaht 44 zwischen Sensorgehäuse 1 und der Montagehülse 7 fixiert.

Die Bauteile des Messelements (10, 7, 13, 12) haben sehr feine Längentoleranzen, diese sind so gewählt, dass beim Zusammenbau keine zu große Vorspannung des Messelementes (10, 7, 13, 12) auftritt oder dass es zu einer Spaltfederung kommen könnte.

Der Verbund von Messfeder 10 und Montagehülse 7 hat keinen Kontakt zur Innenfläche des Sensorgehäuses 1 (siehe Detailansicht B) und weist demnach ein radiales Spiel 45 zum Innenumfang des Sensorgehäuses auf.

### Funktion:

Der Sensor wird über ein Gewinde am Sensorgehäuse 1 in die Messstelle des jeweiligen Motors in eine Gewindebohrung im Zylinderkopf eingeschraubt, um von den Verbrennungsgasen in der Brennkammer beaufschlagt zu werden.

Durch den Verbrennungsprozess wird die Membranscheibe 12 mit Druck belastet, durch diesen kommt es zu einer Relativverschiebung des Verbundes von Membranscheibe 12 und der Messfeder 10. Da die Messfeder 10 mit der Montagehülse 7 über die Schweißnaht 34 verschweißt und somit fixiert ist, kommt es zu einer elastischen Verformung der Messfläche 18 der Messfeder 10.

Da der Verbund von Messfeder 10 und Montagehülse 7 ein radiales Spiel 45 zur Innenseite des Sensorgehäuses 1 hat, wirkt das gesamte Messelement wie ein entkoppelter Topf. Das Messelement 7, 10 wird also nicht durch Temperaturschwankungen des Sensorgehäuses 1, durch entstehende Spannungen bei dessen Verschraubung und die jeweils daraus resultierenden Verformungen beeinflusst, was zu einer Verfälschung der Messergebnisse führen würde.

Die ebenfalls hülsenförmige Montagehülse 7 bildet eine zentrale Mittenausnehmung, die als Hohlraum 42 ausgebildet ist, durch den sich der axiale Teil der Messfeder 10 unter Bildung eines radialen Abstandes hindurch erstreckt. Somit ist die Montagehülse 7 lediglich in ihrem oberen Bereich über die Schweißnaht 34 (siehe Figur 1 und Detail B) mit der tellerförmigen Unterseite der Messfeder 10 verbunden.

Durch die spezielle Auslegung der Messfeder 10 entstehen auf deren Messfläche 18 Bereiche mit gleicher Zug- und Druckspannung. Auf der Messfläche 18, welche die Verformung erfährt, ist eine Messwiderstandsstruktur 19, 20 aufgebracht, somit wird hier je nach Verformung ein bestimmtes Signal ausgegeben. Durch Bonden wird die Struktur 19, 20 mit elektrischen Leitungen 15 verbunden, über welche dann eine Signalauswertung erfolgt.

Da es im Motor zu hohen Temperaturbelastungen kommt und die Temperatur an der Messwiderstandsstruktur 19, 20 nicht zu hoch sein sollte, wird ein ringscheibenförmiges Wärmeleitelement 13 verbaut. Durch dieses wird die Wärme an der Membranscheibe 12 von der Membran-Innen zur Membran-Außenseite und dann über die Montagehülse 7 und die Schweißnaht 44 direkt an den Sensorkörper 1, welcher im gekühlten Motorblock eingeschraubt ist, abgeleitet. Somit kommt es zu keiner Schädigung der Widerstandsstruktur 19, 20 und zugleich wird ein Temperaturdriften verhindert.

Des Weiteren ist der Sensorkörper 1, 1', 1" aus einem hochwärmeleitfähigen Stahl gefertigt, dadurch soll die Temperatur zusätzlich schneller an den gekühlten Motor abgegeben werden.

Die Figuren 2 bis 4 zeigen, dass sich, von dem zylindrischen Ansatz nach oben gehend, ein Dichtungsring 3 vergrößerten Durchmessers anschließt, der bevorzugt angeschweißt oder aufgepresst ist. Daran schließt sich ein Ringbund 4 vergrößerten Durchmessers an, der bevorzugt radial ausgeprägt ist, jedoch auch mit einer Schlüsselweite versehen werden kann. Der Ringbund 4 geht in einen Ringbund 9 verringerten Durchmessers über, und es ist lediglich schematisiert dargestellt, dass auf dem Ringbund 4 eine Hülse 5 aufgeschweißt ist, durch deren Hohlraum eine Anzahl von Leitungen 15 hindurch geführt ist, die ein Kabelbündel 16 bilden, um die Messsignale, die von den Brückenelementen 20 auf der Messfläche 18 abgeleitet werden, an eine externe Messaufnehmereinrichtung weiterzuleiten.

An der Unterseite geht der zylindrische gerade Ansatz mit dem Außengewinde 2 in ein Ringbund 6 verringerten Durchmessers über, der seinerseits einen unteren zylindrischen Ansatz 35 ausbildet.

Die Figur 4 zeigt einen Schnitt durch ein Sensorelement, das im Wesentlichen aus der rohr- oder hülsenförmigen Messfeder 10 besteht, die im Schnitt etwa hutförmig ausgebildet ist und eine untere Messfläche 27 aufweist, die in den Brennraum 39 hineinsieht, dessen Druckwellen in Pfeilrichtung 26 auf die Messfläche 27 der Messfeder 10 wirken.

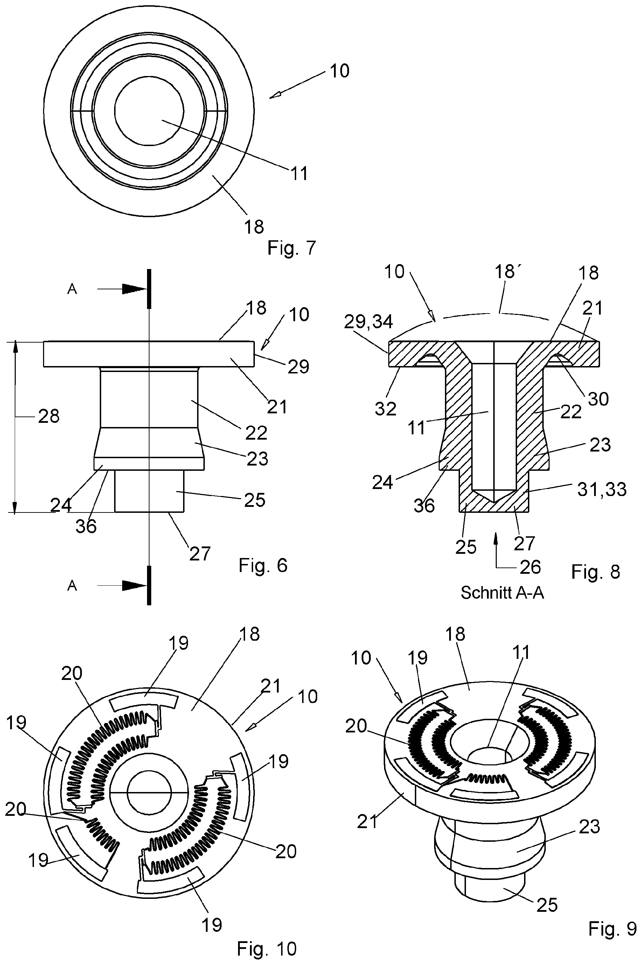

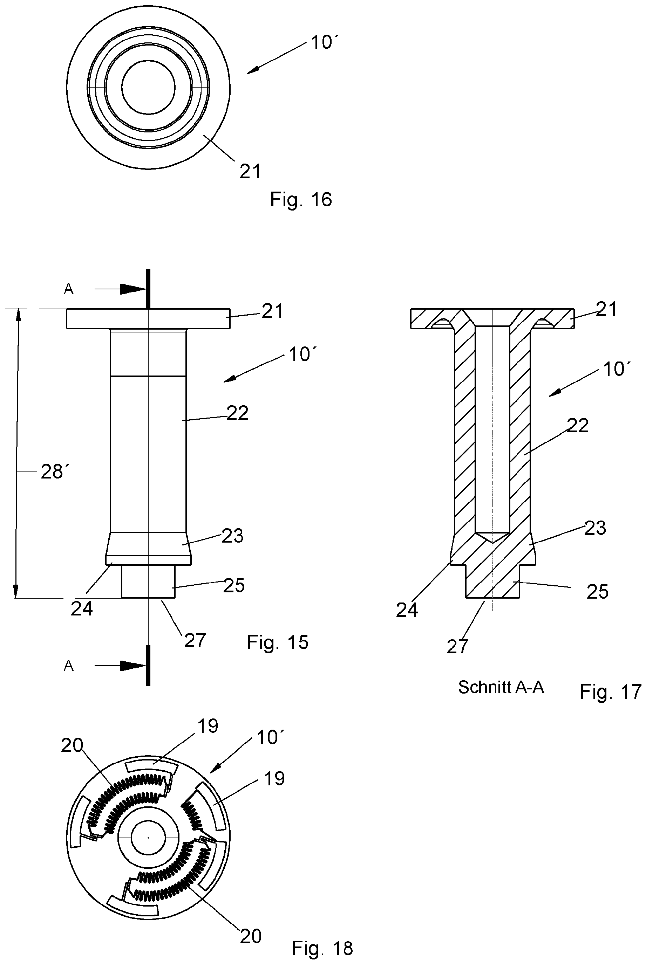

In der Seitenansicht und der Perspektiv-Ansicht gem. Figur 6 und 9 ist das Aussehen der Messfeder 10 etwa mit dem einer hohlen Federbüchse vergleichbar, die in Richtung ihrer Längserstreckung elastisch federnd komprimierbar ist und deshalb eine Federcharakteristik ähnlich einer Tellerfeder aufweist. Dieses charakteristische Aussehen und die daraus abgeleiteten mechanischen und thermischen Eigenschaften gelten auch für alle anderen gezeigten Ausführungsformen der Figuren 10 bis 28.

In den Brennraum 39 sieht auch eine Membranscheibe 12 hinein und wird von den dort herrschenden Drücken und Temperaturen unmittelbar beaufschlagt.

Dabei greift der Hülsenansatz 25 der Messfeder 10 durch eine Mittenausnehmung in der Membranscheibe 12 hindurch und wird ebenfalls von den im Brennraum herrschenden Drücken und Temperaturen unmittelbar beaufschlagt. Die Verbindung zwischen der Membranscheibe 12 und der Messfeder 10 im Bereich der unteren Messfläche 27 erfolgt durch eine zirkulare Schweißnaht 44, wie in Figur 1 dargestellt.

Ferner ist die Umfangsverbindung zwischen der Membranscheibe 12 und der Montagehülse 7 durch eine am Umfang umlaufende erste Schweißnaht 44 gebildet. Über dieser ersten Schweißnaht ist im axialen Abstand eine zweite Schweißnaht 44 vorgesehen, mit welcher die Montagehülse 7 am unteren stirnseitigen Ende des Sensorkörpers 1 festgelegt ist.
Die Membranscheibe 12 bildet einen inneren zylindrischen, in axialer Richtung verlängerten Ringansatz 14 (siehe Fig. 1, Detail A), in dem sich die Messfeder 10 mit einem Ringbund 24 und einer dort angeordneten Anschlagfläche 36 abstützt.

Nach einer bevorzugten Ausgestaltung der Erfindung ist vorgesehen, dass auf der inneren Oberseite der Membranscheibe 12 eine Ringnut 46 angeordnet ist, in die ein Wärmeleitelement 13 eingelegt ist. Die Vorteile eines solchen scheibenförmigen Wärmeleitelements 13 werden später näher erläutert.

Es kann jedoch auch vorgesehen sein, dass das Wärmeleitelement 13 direkt auf der Oberfläche der ansonsten glatten Membranscheibe 12 aufliegt, wodurch die Ringnut entfallen kann.

Die Membranscheibe 12 legt sich mit ihrem, im Durchmesser vergrößerten Außenumfang in axialer Richtung an den unteren Ringbund 7a der Montagehülse 7 an, die im Wesentlichen aus zwei voneinander beabstandeten und miteinander über einen axialen Ringbund miteinander verbundenen Ringhülsen besteht. Die Verbindung erfolgt über die in Figur 1 dargestellte untere Schweißnaht 44.

Die Montagehülse 7 bildet eine Mittenbohrung 8, durch welche der axiale Ansatz der Messfeder 10 mit einem radialen und axialen Bewegungsspiel hindurch greift, wobei die Oberseite der Montagehülse 7 eine Anschlagfläche für eine demgegenüber liegende Anschlagfläche 32 an der Unterseite des Ringansatzes 21 der Messfeder 10 bildet. Somit stützt sich der Ringansatz 21 der Messfeder 10 an der Oberseite der Montagehülse 7 ab.

Das Sensorgehäuse 1 wird im Übrigen mit dem Dichtungsring 3 in eine zugeordnete Bohrung im Zylinderkopf einer Brennkraftmaschine eingeschraubt, weil das Außengewinde 2 mit einem zugeordneten Innengewinde am Zylinderkopf in Eingriff gebracht ist.

Es kann gemäß Figur 3 noch vorgesehen sein, dass das aus dem Innenraum des Sensorgehäuses 1 herausgeführte Kabelbündel 16 in einem Kabelführungskanal 17 zusammen gefasst ist.

Gemäß Figur 5 ist auf der Oberfläche des im Durchmesser vergrößerten Ringansatzes 21 der Messfeder 10 eine kreisförmige Messfläche 18 angeordnet, die aus dem Material der Messfeder 10 gebildet ist. Auf der Messfläche 18 sind Kontaktflächen 19 aufgebracht, die zum Beispiel durch Bonden oder Sputtern aufgebracht sind.

Auf der Messfläche 18 ist in der Art einer Wheatstone'schen Brücke eine Anzahl von elektrisch leitfähigen Brückenelementen 20 aufgebracht, die ebenfalls aufgesputtert oder in anderer geeigneter Weise aufgebracht sind. Es handelt sich um elektrisch leitfähige Elemente, welche eine Verformung der Messfläche 18 durch eine Widerstandsänderung des elektrischen Widerstandes feststellen und in der Art einer Wheatstone'schen Brückenschaltung als Änderung des elektrischen Widerstandes an eine Auswerte-Einheit weiterleiten.

Anhand der Figuren 6 bis 10 wird ein erstes Ausführungsbeispiel einer Messfeder 10 näher beschrieben, wobei auch die anderen Ausführungsbeispiele gleich ausgebildet sind und deshalb für alle anderen Ausführungsbeispiele die gleichen Bezugszeichen für die gleichen Teile verwendet wurden. Die Ausführungsbeispiele unterscheiden sich nur im Hinblick auf die Messfeder-Länge 28, die einmal eine mittlere Länge 28' und eine demgegenüber noch vergrößerte Länge 28" ausbildet. Aus diesem Grund wurden die weiteren Messfedern mit den Bezugszeichen 10', 10" und 10"' versehen, weil alle vorher beschriebenen Merkmale der Messfeder 10 mit allen weiteren Merkmalen der übrigen Bauelemente gleich wirkend aufgebaut sind und deshalb auch die gleiche Beschreibung gilt.

Im Ausführungsbeispiel nach den Figuren 6 bis 10 besteht die Messfeder 10 in seiner kurzen Ausführung im Wesentlichen aus einem hutförmigen oder büchsenförmigen Hohlprofil mit dem im Durchmesser vergrößerten Ringansatz 21, auf dessen Oberfläche - wie beschrieben - die Messfläche 18 angeordnet ist.

Auf der Messfläche 18 sind die vorher beschriebenen Brückenelemente 20 in elektrisch isolierender Weise und hochtemperaturfest in der Art einer Wheatstone'schen Brückenschaltung aufgebracht.

Der Außenumfang des Ringansatzes 21 ist bearbeitet und bildet somit eine spielbehaftete Passfläche 29 in Richtung auf den Innenumfang des Sensorgehäuses 1, 1', 1". Somit hat der Verbund zwischen der Messfeder 10 und der Montagehülse 7 ein radiales Spiel 45 zum Innenumfang des Sensorgehäuses in diesem Bereich.

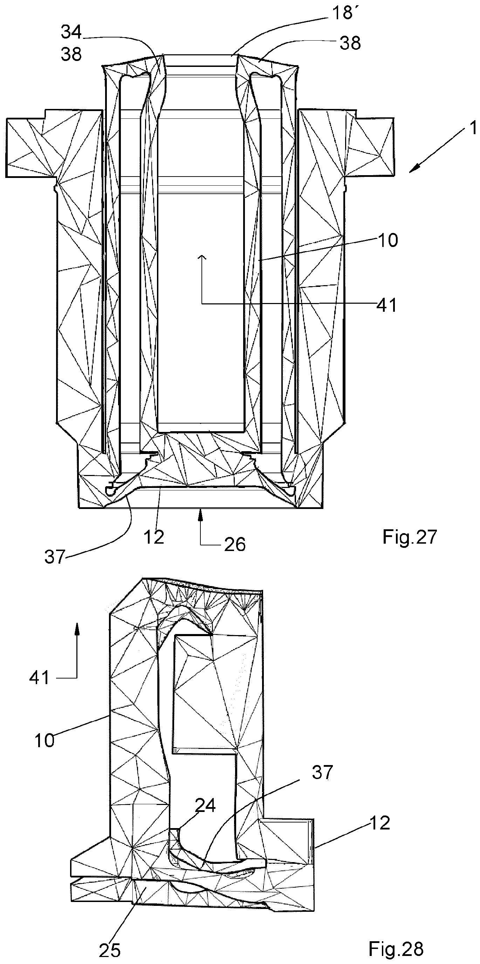

Die Unterseite des Ringansatzes 21 trägt eine Ringnut 30. Auch diese Ringnut 30 trägt zu einer leichten Verformbarkeit des Ringansatzes 21 bei, der sich in der Art einer elastisch biegbaren Tellerfeder bauchförmig (konvex) in Richtung auf die dort dargestellte Messfläche 18' verformen soll - siehe hierzu Figur 27.

Am Ringansatz 21 vergrößerten Durchmessers schließt sich ein axialer Hülsenansatz 22 an, der an seiner Unterseite in eine Konushülse 23 übergeht, die ihrerseits an ihrer Unterseite eine Anschlagfläche 36 für den Anschlag an der vorher beschriebene Membranscheibe 12 ausbildet.

Um ein günstiges Federvermögen für die Messfeder 10 in der Art einer büchsenförmigen Tellerfeder zu ermöglichen, ist eine zentrale Mittenausnehmung 11 vorgesehen, die sich möglichst in axialer Richtung durch die Messfläche 18 hindurch erstreckt und auch noch in den Bereich des im Durchmesser verringerten Hülsenansatzes 25 greift.

Die Länge der Mittenausnehmung 11 kann variabel sein. Es ist nicht unbedingt lösungsnotwendig, dass sich die Mittenausnehmung 11 bis in den Bereich des Hülsenansatzes 25 erstreckt, was aber bevorzugt wird.

Ebenso soll der Durchmesser der Mittenausnehmung 11 relativ groß dimensioniert sein, um ein ausreichendes Stauchvermögen und ein elastisches Rückfedervermögen für die hülsenförmige Messfeder 10 zu erbringen.

Es kann im Übrigen in einer ersten Ausführungsform vorgesehen sein, dass die Membranscheibe 12 mithilfe einer zugeordneten Schweißstelle 33 am Außenumfang des Hülsenansatzes 25 der Messfeder 10 festgelegt wird. Eine alternative Befestigung ist in Figur 1 gezeigt, wo der Hülsenansatz 25 der Messfeder 10 stirnseitig mit der zirkularen Schweißnaht 44 mit der Membranscheibe 12 verbunden ist.

In einer anderen Ausgestaltung kann es vorgesehen sein, dass am Hülsenansatz 25 der Messfeder 10 ein Außengewinde 31 angeordnet ist, welches mit einem zugeordneten Innengewinde im Bereich der Membranscheibe 12 zusammenwirkt.

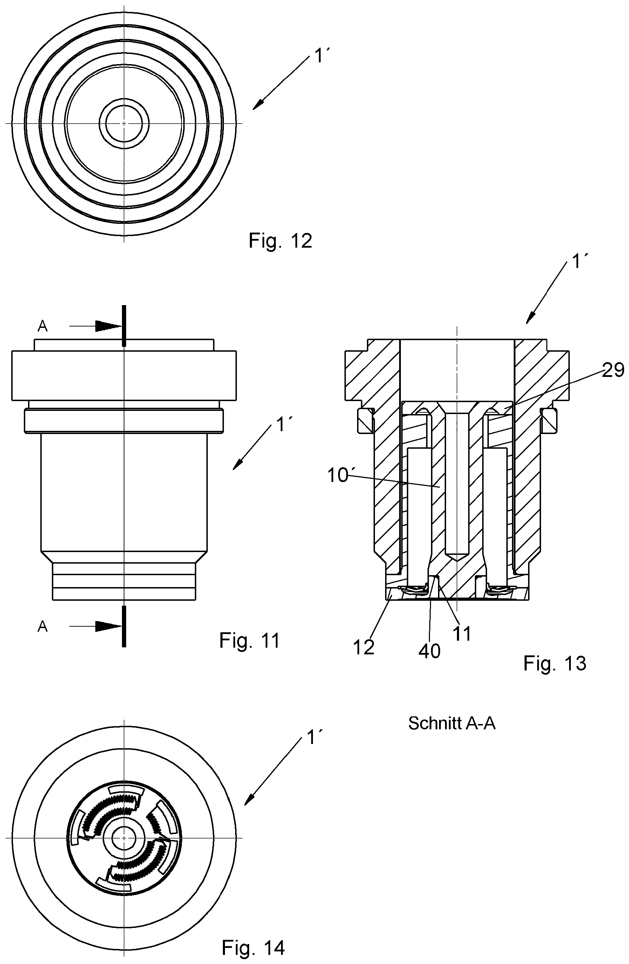

Die Ausführungsbeispiele nach den Figuren 11 bis 13 zeigen ein gleiches Sensorgehäuse 1', wobei lediglich aufgrund einer in der Länge veränderten Messfeder 10' nunmehr gegebenenfalls eine andere Gehäuseabmessung und/oder ein anderer Einbauort für die Festlegung der spielbehafteten Passfläche 29 im Innenraum des Sensorgehäuses 1' notwendig ist.

Für das Ausführungsbeispiel mit einer Messfeder 10' mit einer verlängerten Messfeder-Länge 28' gelten jedoch die gleichen Erläuterungen, die vorstehend anhand der Figuren 6 bis 10 gegeben wurden.

Die äquivalente Darstellung gilt auch für ein Sensorgehäuse 1", welches eine noch weiter in der Länge verlängerte Messfeder 10" aufnimmt. Die Montagehülse 7 greift mit ihrem oberen Ringansatz aus dem Sensorgehäuse 1 hinaus.

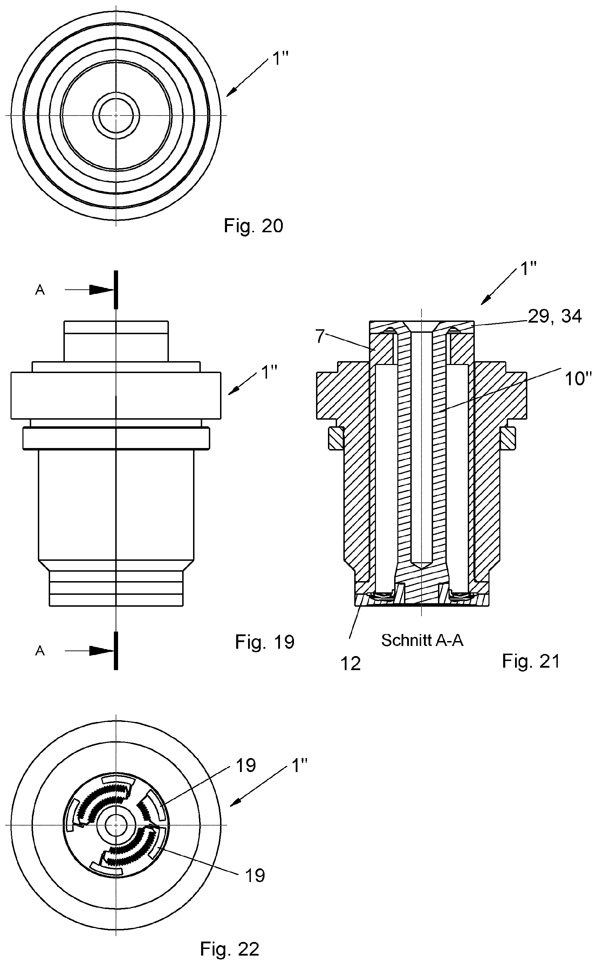

Die Ausführungsform nach Figuren 19 bis 22 hat den Vorteil, dass die Messfeder 10" leicht aus dem Sensorgehäuse 1 entnehmbar ist, weil die Passfläche 29 der Messfeder 10" außerhalb des Sensorgehäuses 1 angeordnet ist.

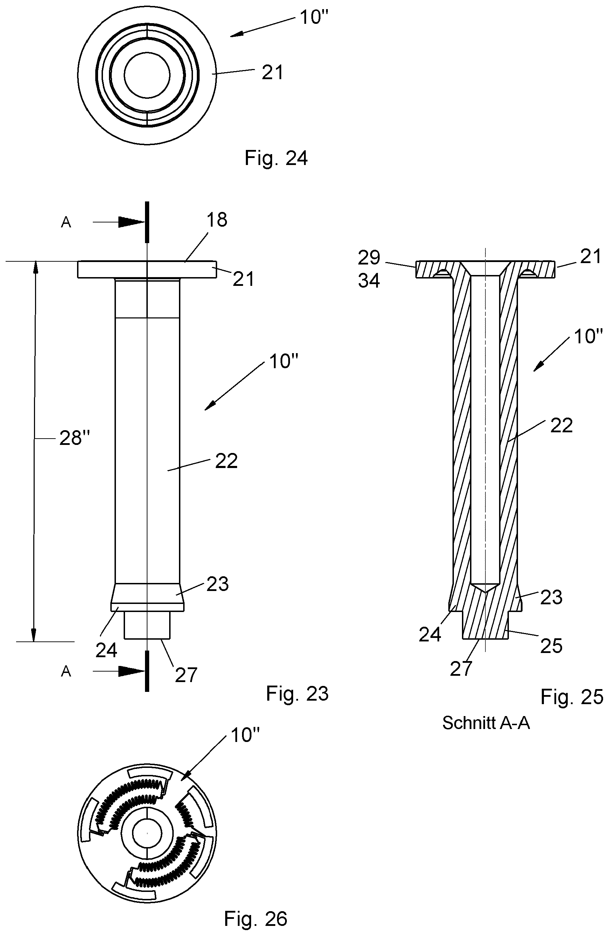

Das Ausführungsbeispiel nach den Figuren 23 bis 26 zeigt eine solche, in der Messfeder-Länge 28" vergrößerte Messfeder 10".

Figur 27 zeigt schematisiert eine Finite-Elemente-Berechnung eines Verformungsvorgangs einer Messfeder 10, 10', 10" unter Einwirkung eines an sich unzulässigen und an sich nicht-tolerablen Druckschlages auf die Membranscheibe 12 , woraus sich ergibt, dass sich die Messfeder 10, 10', 10" in der Art einer büchsenförmigen Tellerfeder zusammen mit der Membranscheibe 12 elastisch verformt und dabei eine Schubbewegung in axialer Richtung ausführt, sodass der Druckschlag aufgrund der tellerfeder-artigen Verformung der Messfeder 10, 10', 10" gedämpft aufgefangen wird und sich dabei die Messfläche 18 im Schnitt bogenförmig elastisch verformt. Aufgrund der besonderen, hutförmigen Profilgebung des Ringansatzes 21 mit der darunter liegenden, die Dicke des Ringansatzes 21 schwächenden Ringnut 30 wird eine solche Verformung der Messfläche 18 erreicht, dass Bereiche gleicher Zug- und Druckspannung entstehen und dadurch die Brückenelemente 20 gleichmäßig und verzerrungsfrei verformt werden.

Die Belastung der in Figur 27 und 28 gezeigten Konstruktion mit einer zusätzlichen Druckspitze von 300 bar oder mehr über den im Verbrennungsraum üblicherweise herrschenden Druck zeigt, dass die Membranscheiben-Verformung nicht wesentlich von Verbiegungen zwischen den beiden Rändern geprägt ist, sondern durch die Verschiebung dieser Ränder relativ zueinander

Es hat sich gezeigt, dass eine solche Relativverschiebung unnötig hohe Spannungen an der Membranscheibe 12 erzeugt und daher möglichst zu reduzieren ist, durch
- eine steifere Messfeder 10
- und/oder durch kürzere Montagehülsen 7 und/oder kürzere Messfedern 10, 10'

Damit können auch unerwartete Druckschläge, die ansonsten zu einer Zerstörung des Sensors führen, in besonderer Weise aufgefangen werden, weil erfindungsgemäß die Messfeder 10, 10', 10" mit ihrem oberen axialen Ende in der Art einer Tellerfeder axial federnd verschiebbar im Sensorgehäuse 1, 1' gelagert ist.

Es zeigt sich, dass im Sensor mit Wärmeleitelement 13 der kritische innere Membranrand der Membranscheibe 12 kühler bleibt als in einem Sensor ohne Wärmeleitelement 13. Daher wird die Verwendung eines ringscheibenförmigen Wärmeleitelements 13 bevorzugt, obwohl die Erfindung nicht darauf beschränkt ist.

Das ist damit zu erklären, dass das Wärmeleitelement 13 (bevorzugt eine KupferLegierung mit hohem Wärmeleitwert) den Hauptteil des Wärmetransportes zwischen der Membranscheibe 12 von der Membran-Innenseite zum kühleren Außen-Rand übernimmt, sodass der größere Wärmeleitweg über die Montagehülse 7 und die Messfeder 10, 10', 10" keinen großen Einfluss hat.

Eine erste Auslegung/Optimierung auf die gewünschte Drucklast von 300 bar wurde daher mit einer aussichtsreicheren Variante mit kurzem Messelement (gemäß den Figuren 2-9) durchgeführt; bei der vorläufig vorgegebenen Temperaturlast von 20W/cm² bleibt diese Variante auch gut im vorgegebenen Temperaturfenster.

Für die lange Variante eines Messfeder-Stützrohrs 10', 10" nach den Figuren 12 bis 25 spricht, dass der elektrische Anschluss prinzipiell leichter gelöst werden kann, also mit überschaubarem Aufwand realisiert werden kann.

Kurze Messfedern 10 nach den Figuren 1 bis 9 versprechen hingegen
- deutlich bessere Belastbarkeit durch Druck und Wärmestrom kombiniert mit
- besserem Messverhalten durch geringere Temperaturdriften, und verminderte Beschleunigungsfehler etc.

So zeigt die Figur 27 ein Modell der Aufbiegung des Messfeder 10, 10', 10" unter Einwirkung einer Druckspitze, aus der zu entnehmen ist, dass die in Pfeilrichtung 26 auf die untere Membranscheibe 12 wirkende Druckspitze zu einer axialen Verschiebung der Messfeder 10, 10', 10" im Sensorgehäuse 1, 1', 1" in Pfeilrichtung 41 unter elastischer Verbiegung der voneinander beabstandeten Biegeabschnitte 37, 38 führt.

Die Figur 28 zeigt einen rechtsseitigen, vergrößerten Halbschnitt durch das Biegemodell nach Figur 27 mit Darstellung eines ersten Biegeabschnitts 37. Der erste (untere) Biegeabschnitt 37 wird durch die randseitige Einspannung der Membranscheibe 12 am Sensorgehäuse 1, 1', 1" über den Ringbund 7a der Montagehülse 7 gebildet, während der zweite (obere) Biegeabschnitt 38 durch eine randseitige Verformung des tellerförmigen Ringansatzes 21 der Messfeder 10 aufgrund der Abstützung an der gehäusefesten Montagehülse 7 gebildet ist.

Zusammenfassend wird festgestellt, dass hohe Temperaturbelastungen, sowie eine Temperaturdrift, was zur Schädigung von Bauteilen oder zu falschen Messergebnissen führen würde, durch den Einbau des ringscheibenförmigen Wärmeleitelements 13 verhindert werden.

Durch die spezielle Gestaltung der Messfeder 10 sind auf deren Messfläche 18 Bereiche mit gleicher Zug- und Druckspannung vorhanden, wie sie für das Aufbringen einer Widerstandsstruktur der Brückenelemente 20 von Vorteil sind. Damit sind verzerrungsfreie Widerstandsmessungen möglich.

Der Verbund von Messfeder 10 und Montagehülse 7 hat aufgrund des radialen Spiels 45 keinen Kontakt zur Innenfläche des Sensorgehäuses 1, 1', 1", somit werden die Messergebnisse nicht durch Temperaturschwankungen und Einbauspannungen des Sensorgehäuses 1, 1', 1" verfälscht.

Da der auftretende Druck nicht direkt auf die Messfläche 18 wirkt, sondern über die Membranscheibe 12 (welche in der Dicke variiert werden kann) und die Messfeder 10, die als Stößel dient, an die Messfläche 18 weitergeleitet wird, ist das Messelement unempfindlicher gegenüber möglichen Druckstößen.

### Zeichnungslegende

- 1: Sensorgehäuse 1', 1"
- 2: Außengewinde
- 3: Dichtungsring
- 4: Ringbund
- 5: Hülse
- 6: Ringbund
- 7: Montagehülse 7a (Ringbund)
- 8: Mittenbohrung
- 9: Ringbund
- 10: Messfeder
- 11: Mittenausnehmung
- 12: Membranscheibe
- 13: Wärmeleitelement
- 14: Ringansatz (von 12)
- 15: Leitung
- 16: Kabelbündel
- 17: Kabelführungskanal
- 18: Messfläche 18'
- 19: Kontaktfläche
- 20: Brückenelemente
- 21: Ringansatz
- 22: Hülsenansatz
- 23: Konushülse
- 24: Ringbund
- 25: Hülsenansatz
- 26: Pfeilrichtung
- 27: Messfläche
- 28: Messfeder-Länge 28', 28"
- 29: Passfläche
- 30: Ringnut
- 31: Außengewinde (von 25)
- 32: Anschlagfläche
- 33: Schweißstelle
- 34: 35 Ansatz
- 36: Anschlagfläche
- 37: Biegeabschnitt (unten)
- 38: Biegeabschnitt (oben)
- 39: Brennraum
- 40: Membran
- 41: Pfeilrichtung
- 42: Hohlraum
- 43: Gewinde
- 44: Schweißnaht
- 46: Ringnut

## Patentansprüche

1. Membrandrucksensor zur Erfassung des Brennraumdrucks bei Brennkraftmaschinen, insbesondere Dieselmotoren und Gasmotoren, wobei an der Vorderseite eines Sensorgehäuses (1, 1', 1") eine mit dem Sensorgehäuse (1, 1', 1") abdichtend verbundene und von der Brennraumatmosphäre beaufschlagte Membranscheibe (12) vorgesehen ist, deren Durchbiegung über ein oder mehrere Übertragungselemente auf einen Sensor übertragbar ist, wobei zur Übertragung der Durchbiegung der Membranscheibe (12) auf eine Messfläche (18) eines Sensors (19, 20) eine etwa im Profil hutförmige oder hülsenförmige Messfeder (10, 10', 10") mit der Membranscheibe (12) an ihrem unteren axialen Ende verbunden ist, und mit ihrem gegenüberliegenden axialen Ende unter Bildung eines radialen Hohlraums (42) mit einer Montagehülse (7) verbunden ist, und dass der Verbund aus Messfeder (10, 10', 10") und Montagehülse (7) ein radiales Spiel (45) zum Innenumfang des Sensorgehäuses (1, 1', 1") aufweist, **dadurch gekennzeichnet, dass** das der membranscheibenseitigen Befestigung gegenüberliegende axiale Ende der Messfeder (10, 10', 10") einen etwa tellerförmigen Ringansatz (21) bildet, an dessen Unterseite die Montagehülse (7) befestigt ist und dass auf der Oberseite des tellerförmigen Ringansatzes (21) die konvex durchbiegbare Messfläche (18) des Sensors angeordnet ist, und dass auf der Messfläche (18) Kontaktflächen (19) und elektrisch leitfähige Brückenelemente (20) angeordnet sind und dass die Membranscheibe (12) ringscheibenförmig ausgebildet ist und am unteren Ende des Sensorgehäuses (1, 1', 1") randseitig mit der Montagehülse (7) verbunden ist.

2. Membrandrucksensor nach Anspruch 1, **dadurch gekennzeichnet, dass** die Membranscheibe (12) eine Mittenausnehmung (11) aufweist, in der das axiale Ende der hut- oder hülsenförmige Messfeder (10, 10', 10") befestigt ist ¹ Aus Anspruch 2

3. Membrandrucksensor nach Anspruch 1 oder 2, **dadurch gekennzeichnet, dass** die Membranscheibe (12) über eine außenseitige, zirkular umlaufende Schweißnaht (44) mit einem radialen Ansatz der Montagehülse (7) verbunden ist.

4. Membrandrucksensor nach Anspruch 3, **dadurch gekennzeichnet, dass** der radiale Ansatz der Montagehülse (7) über eine weitere, zirkular umlaufende Schweißnaht (44) mit der unteren Stirnseite des Sensorgehäuses (1, 1', 1") verbunden ist.

5. Membrandrucksensor nach einem der Ansprüche 1 bis 4, **dadurch gekennzeichnet, dass** die Messfeder (10, 10', 10") als dosenförmiger, federnder Hohlkörper ausgebildet ist, dessen untere Einspannstelle (11, 12, 14) einen unteren Biegeabschnitt (37) in Verbindung mit der randseitig befestigten Membranscheibe (12) und dessen obere Einspannstelle (7, 34) einen oberen Biegeabschnitt (38) in Verbindung mit der randseitig befestigten Montagehülse (7) ausbildet.

6. Membrandrucksensor nach einem der Ansprüche 1 bis 5, **dadurch gekennzeichnet, dass** die Messfeder (10, 10', 10") einen unteren, im Durchmesser verringerten, axialen Hülsenansatz (25) aufweist, der mit seiner Messfläche (27) in die in axialer Richtung hülsenartig verlängerte Mittenausnehmung (11) in der Membranscheibe (12) festgelegt ist.

7. Membrandrucksensor nach einem der Ansprüche 1 bis 6, **dadurch gekennzeichnet, dass** auf der inneren Oberseite der Membranscheibe (12) eine Wärmeleitelement (13) angeordnet ist.

8. Membrandrucksensor nach Anspruch 7, **dadurch gekennzeichnet, dass** das Wärmeleitelement (13) als Ringscheibe ausgebildet ist und in einer nach oben offenen Ringnut (46) der Membranscheibe (12) festgelegt ist.

9. Membrandrucksensor nach Anspruch 8, **dadurch gekennzeichnet, dass** das Wärmeleitelement (13) an seinem Außenumfang über eine Schweißnaht (44) mit der Membranscheibe (12) und an seinem Innenumfang über eine weitere Schweißnaht mit dem radialen Ringansatz (24) der Membranscheibe (12) verbunden ist.

10. Membrandrucksensor nach einem der Ansprüche 1 bis 9, **dadurch gekennzeichnet, dass** die Brückenelemente (20) in der Art einer Wheatstone'schen Brückenschaltung miteinander verbunden sind und als Beschichtung auf der Messfläche (18, 18') aufgebracht sind.

11. Membrandrucksensor nach einem der Ansprüche 1 bis 10, **dadurch gekennzeichnet, dass** an der Unterseite des Ringansatzes (21) der Messfeder (10, 10', 10") eine Ringnut (30) angeordnet ist, die zu einer konvexen, elastischen Verformbarkeit des Ringansatzes (21) beiträgt.

12. Membrandrucksensor nach einem der Ansprüche 1 bis 11, **dadurch gekennzeichnet, dass** sich in axialer Richtung am Ringansatz (21) der Messfeder (10, 10', 10") ein axialer Hülsenansatz (22) anschließt, der an seiner Unterseite in eine Konushülse (23) übergeht, die ihrerseits an ihrer Unterseite eine Anschlagfläche (36) für die Befestigung mit der Membranscheibe (12) ausbildet.

13. Membrandrucksensor nach einem der Ansprüche 1 bis 12, **dadurch gekennzeichnet, dass** zur Erreichung eines günstigen Federvermögens der Messfeder (10, 10', 10") in ihrer Ausbildung als hut-oder hülsenförmige Messfeder im axialen Teil der Messfeder eine zentrale Mittenausnehmung (11) angeordnet ist, die den die Messfläche (18) aufweisenden zentralen Ringansatz (21) durchgreift, und sich durch die Messfläche (18) hindurch in axialer Richtung bis in den unteren axialen Hülsenansatz (25) erstreckt, der im Bereich der zentralen Mittenausnehmung (11) der Membranscheibe (12) mit dieser verbunden ist.

## Claims

1. Membrane pressure sensor for recording the combustion chamber pressure in internal combustion engines, in particular diesel engines and gas engines, wherein on the front side of a sensor housing (1, 1', 1") is provided a membrane disc (12) connected in sealed manner to the sensor housing (1, 1', 1") and exposed to the combustion chamber atmosphere, the bending of which is transferrable to a sensor via one or more transfer elements, wherein to transfer the bending of the membrane disc (12) to a measuring surface (18) of a sensor (19, 20), an in-profile approximately hat-like or sleeve-like measuring spring (10, 10', 10") is connected to the membrane disc (12) at its lower axial end, and is connected to a mounting sleeve (7) by its opposite axial end with formation of a radial cavity (42), and in that the combination of measuring spring (10, 10', 10") and mounting sleeve (7) has a radial clearance (45) with the inner circumference of the sensor housing (1, 1', 1"), **characterised in that** the axial end of the measuring spring (10, 10', 10") opposite the attachment on the membrane disc side forms an approximately plate-like annular projection (21) to the underside of which the mounting sleeve (7) is attached and **in that** the convexly bendable measuring surface (18) of the sensor is arranged on the upper side of the plate-like annular projection (21), and **in that** contact surfaces (19) and electrically conductive bridge elements (20) are arranged on the measuring surface (18) and **in that** the membrane disc (12) is designed like an annular disc and on the lower end of the sensor housing (1, 1', 1") is connected on the edge side to the mounting sleeve (7).

2. Membrane pressure sensor according to claim 1, **characterised in that** the membrane disc (12) has a middle recess (11) in which the axial end of the hat-like or sleeve-like measuring spring (10, 10', 10") is attached.

3. Membrane pressure sensor according to claim 1 or 2, **characterised in that** the membrane disc (12) is connected to a radial projection of the mounting sleeve (7) via an outer-side, circularly orbiting welding seam (44).

4. Membrane pressure sensor according to claim 3, **characterised in that** the radial projection of the mounting sleeve (7) is connected to the lower end-face side of the sensor housing (1, 1', 1") via a further, circularly orbiting welding seam (44).

5. Membrane pressure sensor according to one of claims 1 to 4, **characterised in that** the measuring spring (10, 10', 10") is formed as a can-like, resilient hollow body, the lower fixing point (11, 12, 14) of which forms a lower bending section (37) in conjunction with the membrane disc (12) attached on the edge side and the upper fixing point (7, 34) of which forms an upper bending section (38) in conjunction with the mounting sleeve (7) attached on the edge side.

6. Membrane pressure sensor according to one of claims 1 to 5, **characterised in that** the measuring spring (10, 10', 10") has a lower axial sleeve projection (25) with reduced diameter which is fixed by its measuring surface (27) into the middle recess (11) extended in axial direction like a sleeve in the membrane disc (12).

7. Membrane pressure sensor according to one of claims 1 to 6, **characterised in that** a heat-conducting element (13) is arranged on the inner upper side of the membrane disc (12).

8. Membrane pressure sensor according to claim 7, **characterised in that** the heat-conducting element (13) is formed as an annular disc and is fixed in an annular groove (46) open at the top of the membrane disc (12).

9. Membrane pressure sensor according to claim 8, **characterised in that** the heat-conducting element (13) is connected to the membrane disc (12) on its outer circumference via a welding seam (44) and to the radial annular projection (24) of the membrane disc (12) on its inner circumference via a further welding seam.

10. Membrane pressure sensor according to one of claims 1 to 9, **characterised in that** the bridge elements (20) are connected to one another like a Wheatstone bridge circuit and are applied to the measuring surface (18, 18') as a coating.

11. Membrane pressure sensor according to one of claims 1 to 10, **characterised in that** an annular groove (30), which contributes to convex, elastic deformability of the annular projection (21), is arranged on the underside of the annular projection (21) of the measuring spring (10, 10, 10").

12. Membrane pressure sensor according to one of claims 1 to 11, **characterised in that** an axial sleeve projection (22), which changes on its underside into a conical sleeve (23), which in turn forms on its underside a stop surface (36) for attachment to the membrane disc (12), is connected in axial direction on the annular projection (21) of the measuring spring (10, 10', 10").

13. Membrane pressure sensor according to one of claims 1 to 12, **characterised in that** to achieve favourable elasticity of the measuring spring (10, 10', 10") as regards its design as a hat-like or sleeve-like measuring spring, a central middle recess (11), which engages through the central annular projection (21) having the measuring surface (18), and extends through the measuring surface (18) in axial direction as far as the lower axial sleeve projection (25) which in the region of the central middle recess (11) of the membrane disc (12) is connected to the latter, is arranged in the axial part of the measuring spring.

## Revendications

1. Capteur de pression à membrane pour capter la pression de chambre de combustion sur des moteurs à combustion interne, en particulier des moteurs diesel et des moteurs à essence, dans lequel du côté avant d'un boîtier de capteur (1, 1', 1") est prévu un disque à membrane (12), relié de manière étanche au boîtier de capteur (1, 1', 1") et sollicité par l'atmosphère de chambre de combustion, dont la flexion est transmissible à un capteur par l'intermédiaire d'un ou plusieurs éléments de transmission, dans lequel pour la transmission de la flexion du disque à membrane (12) à une surface de mesure (18) d'un capteur (19, 20), un ressort de mesure (10, 10', 10") à peu près en forme de chapeau ou de manchon de profil est relié à son extrémité axiale inférieure au disque à membrane (12), et à son extrémité axiale opposée à un manchon de montage (7) en formant une cavité radiale (42), et que l'ensemble du ressort de mesure (10, 10', 10") et du manchon de montage (7) présente un jeu radial (45) par rapport au pourtour intérieur du boîtier de capteur (1, l', 1"), **caractérisé en ce que** l'extrémité axiale du ressort de mesure (10, 10', 10") opposée à la fixation côté disque à membrane forme une saillie annulaire à peu près en forme de plateau (21), du côté inférieur de laquelle est fixé le manchon de montage (7), et que du côté supérieur de la saillie annulaire en forme de plateau (21) est disposée la surface de mesure (18) du capteur à capacité de flexion convexe, et **en ce que** sur la surface de mesure (18) sont disposées des surfaces de contact (19) et des éléments de pont (20) électriquement conducteurs, et que le disque à membrane (12) a la forme d'un disque annulaire et est relié côté bord au manchon de montage (7), à l'extrémité du boîtier de capteur (1, 1', 1").

2. Capteur de pression à membrane selon la revendication 1, **caractérisé en ce que** le disque à membrane (12) présente un creux central (11) dans lequel est fixée l'extrémité axiale du ressort de mesure (10, 10', 10") en forme de chapeau ou de manchon.

3. Capteur de pression à membrane selon la revendication 1 ou 2, **caractérisé en ce que** le disque à membrane (12) est relié par un joint de soudure (44) périphérique circulaire situé côté extérieur à une saillie radiale du manchon de montage (7).

4. Capteur de pression à membrane selon la revendication 3, **caractérisé en ce que** la saillie radiale du manchon de montage (7) est reliée par un autre joint de soudure (44) périphérique circulaire du côté frontal inférieur du boîtier de capteur (1, 1', 1").

5. Capteur de pression à membrane selon l'une des revendications 1 à 4, **caractérisé en ce que** le ressort de mesure (10, 10', 10") est agencé en un corps creux à ressort en forme de boîte, dont le point de serrage inférieur (11, 12, 14) forme une section de flexion inférieure (37) en liaison avec le disque à membrane (12) fixé côté bord et dont le point de serrage supérieur (7, 34) forme une section de flexion supérieure (38) en liaison avec le manchon de montage (7) fixé côté bord.

6. Capteur de pression à membrane selon l'une des revendications 1 à 5, **caractérisé en ce que** le ressort de mesure (10, 10', 10") comporte une saillie de manchon axiale inférieure (25) réduite en diamètre qui est immobilisée avec sa surface de mesure (27) dans le creux central (11), prolongé en forme de manchon dans la direction axiale, dans le disque à membrane (12).

7. Capteur de pression à membrane selon l'une des revendications 1 à 6, **caractérisé en ce que** du côté supérieur intérieur du disque à membrane (12) est disposé un élément conducteur de chaleur (13).

8. Capteur de pression à membrane selon la revendication 7, **caractérisé en ce que** l'élément conducteur de chaleur (13) est agencé en un disque annulaire et immobilisé dans une rainure annulaire (46), ouverte vers le haut, du disque à membrane (12).

9. Capteur de pression à membrane selon la revendication 8, **caractérisé en ce que** l'élément conducteur de chaleur (13) est relié sur son pourtour extérieur par un joint de soudure (44) au disque à membrane (12), et sur son pourtour intérieur par un autre joint de soudure à la saillie annuaire radiale (24) du disque à membrane (12).

10. Capteur de pression à membrane selon l'une des revendications 1 à 9, **caractérisé en ce que** les éléments de pont (20) sont reliés entre eux à la manière d'un montage en pont de Wheatstone et sont appliqués en tant que revêtement sur la surface de mesure (18, 18').

11. Capteur de pression à membrane selon l'une des revendications 1 à 10, **caractérisé en ce que** du côté inférieur de la saillie annulaire (21) du ressort de mesure (10, 10', 10") est disposée une rainure annulaire (30), qui contribue à une déformabilité élastique convexe de la saillie annulaire (21).

12. Capteur de pression à membrane selon l'une des revendications 1 à 11, **caractérisé en ce qu'**à la saillie annulaire (21) du ressort de mesure (10, 10', 10") fait suite dans la direction axiale une saillie de manchon axiale (22) qui se prolonge de son côté inférieur par un manchon conique (23) qui forme lui-même de son côté inférieur une surface de butée (36) pour la fixation avec le disque à membrane (12).

13. Capteur de pression à membrane selon l'une des revendications 1 à 12, **caractérisé en ce que** pour obtenir une capacité de ressort avantageuse du ressort de mesure (10, 10', 10") dans son agencement en ressort de mesure en forme de chapeau ou de manchon, il est prévu dans la partie axiale du ressort de mesure un creux central (11) centré qui traverse la saillie annulaire (21) centrée présentant la surface de mesure (18) et s'étend à travers la surface de mesure (18) dans la direction axiale jusque dans la saillie de manchon axiale inférieure (25) qui est reliée dans la zone du creux central centré (11) du disque à membrane (12) à celui-ci.
